# EUROPÄISCHE PATENTANMELDUNG

(11) **EP 4 786 210 A1**
(43) Veröffentlichungstag der Anmeldung: **05.08.2026**
(21) Anmeldenummer: 26151523.3
(22) Anmeldetag: 13.01.2026
(51) Int. Cl.: B60C 9/20, B60C 9/22, C08L 7/00

(54) **NUTZFAHRZEUGREIFEN**

(30) Priorität: 23.01.2025 DE 102025102351
(71) Anmelder: Continental Reifen Deutschland GmbH, 30175 Hannover (DE)
(72) Erfinder: Dr. Hengesbach, Frank, 30175 Hannover (DE); Plückers, Matthias, 30175 Hannover (DE)
(74) Vertreter: Continental Corporation

(57) **Zusammenfassung**

Die Erfindung betrifft einen Nutzfahrzeugreifen in Radialbauart mit einer Karkasse mit Karkasseinlage (3), mit einem radial außerhalb der Karkasseinlage (3) aufgebauten Gürtel (4), mit einem radial außerhalb des Gürtels (4) auf dem Gürtel (4) aufgebauten profilierten Laufstreifen (1), wobei der Gürtel (4) aus wenigstens drei von radial innen nach radial außen aufeinander liegend angeordneten Gürtellagen (8, 9, 10, 11, 12) ausgebildet ist, wobei die Gürtellagen (8, 9, 10, 11, 12) in einer schwefelvernetzbaren Gummimischung eingebettete Festigkeitsträger enthalten, die in jeder Gürtellage (8, 9, 10, 11, 12) jeweils parallel zueinander verlaufen, und wobei eine der zwischen einer radial inneren und einer radial äußeren Gürtellagen (8, 9, 11, 12), vorzugsweise zwischen einer radial inneren und einer radial äußeren als Kreuzlagen bzw. Arbeitslagen ausgebildeten Gürtellagen (9, 11), angeordnete Gürtellage (10) eine als Nullgradlage ausgebildete Gürtellage (10) ist, deren Festigkeitsträger High-Elongation-Stahlcorde sind, die in Umfangsrichtung oder zur Umfangsrichtung unter einem Winkel, welcher von der Umfangsrichtung um maximal ± 5° abweicht, verlaufen, wobei erfindungsgemäß vorgesehen ist, dass zumindest die schwefelvernetzbare Gummimischung der als Nullgradlage ausgebildeten Gürtellage (10) folgende Bestandteile enthält:
• 70 bis 100 phr (Gewichtsteile, bezogen auf 100 Gewichtsteile der gesamten Kautschuke in der Mischung) Naturkautschuk,
• bis zu 30 phr eines Polybutadiens,
• 1 bis 50 phr zumindest eines Rußes,
• 10 bis 100 phr zumindest einer hoch dispergierbaren Kieselsäure, die eine CTAB-Zahl gemäß ASTM D 3765 von mehr als 130 m²/g aufweist,
• zumindest ein Silankupplungsagens und
• ein Haftsystem.

## Beschreibung

Die Erfindung betrifft Nutzfahrzeugreifen in Radialbauart mit einer Karkasse, mit einem radial außerhalb der Karkasse aufgebauten Gürtel, mit einem radial außerhalb des Gürtels auf dem Gürtel aufgebauten profilierten Laufstreifen, wobei der Gürtel aus wenigstens drei von radial innen nach radial außen aufeinander liegend angeordneten Gürtellagen ausgebildet ist, wobei die Gürtellagen jeweils in einer schwefelvernetzbaren Gummimischung eingebettete Festigkeitsträger enthalten, die in jeder Gürtellage jeweils parallel zueinander verlaufen, und wobei eine der zwischen einer radial inneren und einer radial äußeren Gürtellagen, vorzugsweise zwischen einer radial inneren und einer radial äußeren als Kreuzlagen bzw. Arbeitslagen ausgebildeten Gürtellagen, angeordnete Gürtellage eine als Nullgradlage ausgebildete Gürtellage ist, deren Festigkeitsträger High-Elongation-Stahlcorde sind, die in Umfangsrichtung oder zur Umfangsrichtung unter einem Winkel, welcher von der Umfangsrichtung um maximal ± 5° abweicht, verlaufen.

Ein derartiger Nutzfahrzeugreifen ist beispielsweise aus der WO 2015/007403 A1 bekannt. Dieser weist fünf Gürtellagen auf, deren Eigenschaften und Anordnung insbesondere darauf abgestimmt sind, die Abriebfestigkeit und Belastungsstabilität zu optimieren. Die dritte Gürtellage ist als Nullgradlage ausgebildet, in der die Festigkeitsträger nahezu parallel zur Umfangsrichtung mit einer maximalen Abweichung von ±5° verlaufen. Diese als Nullgradlage ausgebildete Gürtellage sorgt für eine hohe Umfangssteifigkeit, was für einen gleichmäßigen Abrieb des Laufstreifens in den Schulterbereichen vorteilhaft ist. Die angrenzende Gürtellagen, nämlich die zweite (radial innen) und die vierte Gürtellage (radial außen), sind Kreuzlagen bzw. Arbeitslagen mit Festigkeitsträgern, die in einem Winkel von 14°-30° zur Umfangsrichtung verlaufen. Diese Lagen sind aus elastischen Corden gefertigt, die eine Dehnung von > 0,2 % bei 10 % Bruchlast aufweisen. Dadurch wird die Steifigkeit in Umfangs- und Querrichtung ausgeglichen und die Gürtelhaltbarkeit verbessert. Die radial äußerste Gürtellage, **nämlich die** fünfte Gürtellage, hat Festigkeitsträger, die in einem Winkel von 35°-70°, vorzugsweise ≥ 43° verlaufen. Dies erhöht die Quersteifigkeit, was insbesondere im mittleren Bereich des Laufstreifens zu einem gleichmäßigeren Abrieb beiträgt. Die radial innerste Gürtellage, nämlich die erste Gürtellage, dient als Basis und sorgt mit einem bevorzugten Winkel von 35°-70° ebenfalls für Stabilität. Die Kombination dieser Gürtellagen führt zu einem Nutzfahrzeugreifen, der über die gesamte Laufflächenbreite gleichmäßiger abnutzt.

Aus der WO 2011/101046 A1 ist ein weiterer Nutzfahrzeugreifen der eingangs genannten Art bekannt, der eine Karkasse, einen Gürtel und einen profilierten Laufstreifen aufweist, wobei der Gürtel aus wenigstens drei von radial innen nach radial außen auf einander liegend angeordneten Gürtellagen ausgebildet ist, wobei die radial innere und die radial äußere Arbeitslage entgegengesetzte axiale Neigungsrichtungen der Festigkeitsträger aufweisen, wobei eine zwischen diesen beiden Arbeitslagen angeordnete Gürtellage Festigkeitsträger aufweist, die in ihrer Ausrichtung einen Winkel β mit 0°≤ β ≤ 5° zur Umfangsrichtung U einschließen, und wobei die Festigkeitsträger einer der beiden Arbeitslagen in ihrer Ausrichtung einen Winkel α zur Umfangsrichtung U mit 10° ≤ α ≤ 45° einschließen, und die Festigkeitsträger der anderen der beiden Arbeitslagen in ihrer Ausrichtung einen Winkel γ zur Umfangsrichtung U mit 45° ≤ γ ≤ 90° einschließen. Bei dieser Ausbildung wird eine hohe Umfangssteifigkeit des Gürtels über die Nullgradlage und eine deutliche Reduktion der zwischen den Arbeitslagen wirkenden Scherkräfte bewirkt, wodurch eine hohe Haltbarkeit des Gürtels bei gewünschtem gleichmäßigen Abrieb ermöglicht wird.

Aufgrund der fortschreitenden Elektrifizierung des Nutzfahrzeugsektors nehmen inzwischen die Anforderungen an die Konstruktion und Leistungsfähigkeit von Nutzfahrzeugreifen deutlich zu. Nutzfahrzeuge, die auf Elektromobilität umgestellt werden, sind in der Regel schwerer als ihre konventionellen, verbrennungsmotorbetriebenen Pendants. Diese Gewichtszunahme ist vor allem auf die großen und schweren Batterien zurückzuführen, die für den Elektroantrieb benötigt werden. Das zusätzliche Gewicht führt zu einer erhöhten Belastung der Reifen, was sich insbesondere in einer intensiveren Wärmeentwicklung sowie einem schnelleren Verschleiß und einer verringerten Haltbarkeit niederschlägt. Die intensivere Wärmeentwicklung schlägt sich aber auch nachteilig auf den Rollwiderstand der Nutzfahrzeugreifen nieder. Durch das zusätzliche Gewicht der Fahrzeuge und die spezifischen Belastungen durch den elektrischen Antrieb, wie etwa das sofortige Drehmoment und insbesondere die regenerative Bremsenergie, werden die auf die Nutzfahrzeugreifen wirkenden Kräfte deutlich erhöht.

Der erwähnte Rollwiderstand spielt bei Elektro-Nutzfahrzeugen eine fast wichtigere Rolle als bei herkömmlichen Fahrzeugen mit Verbrennungsmotoren, da Elektrofahrzeuge auf Batterien angewiesen sind, die nur eine begrenzte Reichweite bieten. Ein niedriger Rollwiderstand hilft dabei, die Reichweite zu maximieren und die Energieeffizienz zu steigern.

Darüber hinaus gewinnt die Nachhaltigkeit der Reifennutzung an Bedeutung. Die Runderneuerung stellt eine umweltfreundliche Alternative zur kompletten Neuproduktion von Fahrzeugreifen dar, indem die Karkasse inklusive des Gürtels wiederverwendet und nur die Lauffläche erneuert wird. Doch gerade bei Elektro-Nutzfahrzeugen ist dieser Prozess besonders herausfordernd. Die durch das höhere Gewicht und die erhöhte Wärmeentwicklung entstandene Abnutzung und beschleunigte Alterung stellen erhöhte Anforderungen auch an den zwischen Karkasse und Lauffläche angeordneten Gürtel des Nutzfahrzeugreifens.

Ausgehend von diesem Stand der Technik, liegt der Erfindung die Aufgabe zu Grunde, einen Nutzfahrzeugreifen der eingangs genannten Art bereitzustellen, der eine verbesserte Haltbarkeit und gleichzeitig einen geringen Rollwiderstand, insbesondere hinsichtlich seiner Verwendung bei Elektro-Nutzfahrzeugen, aufweist.

Diese Aufgabe wird durch die Merkmale des Anspruchs 1 gelöst. Weiterbildungen und vorteilhafte Ausgestaltungen der Erfindung ergeben sich aus den Unteransprüchen.

Ausgehend von einem Nutzfahrzeugreifen in Radialbauart mit einer Karkasse, mit einem radial außerhalb der Karkasse aufgebauten Gürtel, mit einem radial außerhalb des Gürtels auf dem Gürtel aufgebauten profilierten Laufstreifen, wobei der Gürtel aus wenigstens drei von radial innen nach radial außen aufeinander liegend angeordneten Gürtellagen ausgebildet ist, wobei die Gürtellagen in einer schwefelvernetzbaren Gummimischung eingebettete Festigkeitsträger enthalten, die in jeder Gürtellage jeweils parallel zueinander verlaufen, und wobei eine der zwischen einer radial inneren und einer radial äußeren Gürtellagen, vorzugsweise eine der zwischen einer radial inneren und einer radial äußeren als Kreuzlagen bzw. Arbeitslagen ausgebildeten Gürtellagen angeordnete Gürtellage, vorzugsweise die mittlere Gürtellage, eine als Nullgradlage ausgebildete Gürtellage ist, deren Festigkeitsträger High-Elongation-Stahlcorde sind, die in Umfangsrichtung oder zur Umfangsrichtung unter einem Winkel, welcher von der Umfangsrichtung um maximal ± 5° abweicht, verlaufen, ist erfindungsgemäß vorgesehen, dass zumindest die schwefelvernetzbare Gummimischung der als Nullgradlage ausgebildeten Gürtellage folgende Bestandteile enthält:
- 70 bis 100 phr (Gewichtsteile, bezogen auf 100 Gewichtsteile der gesamten Kautschuke in der Mischung) Naturkautschuk,
- bis zu 30 phr eines Polybutadiens,
- 1 bis 50 phr zumindest eines Rußes,
- 10 bis 100 phr zumindest einer hoch dispergierbaren Kieselsäure, die eine CTAB-Zahl gemäß ASTM D 3765 von mehr als 130 m²/g aufweist,
- zumindest ein Silankupplungsagens und
- ein Haftsystem.

Es hat sich gezeigt, dass eine solche schwefelvernetzbaren Gummimischung in der als Nulllage ausgebildeten Gürtellage die Steifigkeit verbessert, wodurch die Gürtellage höhere Belastungen, wie sie beispielsweise bei Elektro-Nutzfahrzeugen auftreten, aufnehmen kann. Dadurch wird die Wärmeentwicklung im Gürtel während der Fahrt und der Verschleiß des Nutzfahrzeugreifens verringert, wodurch sich wiederum die Haltbarkeit des Nutzfahrzeugreifen erhöht. Gleichzeitig wurde festgestellt, dass die Hysterese vergleichsweise gering ist. Eine geringere Hysterese führt zu weniger Wärmeentwicklung im Gürtel und damit, wie bereits ausgeführt, zu einer höheren Haltbarkeit des Nutzfahrzeugreifen, und gleichzeitig führt die geringere Hysterese zu einem niedrigeren Rollwiderstand, wodurch der Energieverbrauch sinkt bzw. die Reichweite des Nutzfahrzeugs steigt. Die erhöhte Steifigkeit der schwefelvernetzbaren Gummimischung in der als Nulllage ausgebildeten Gürtellage ist vorteilhaft bei der bei Belastung des Nutzfahrzeugreifens auftretenden Kompression des Gürtels. Es hat sich gezeigt, dass aufgrund dieser Steifigkeitserhöhung weniger Brüche der in der als Nullgradlage ausgebildeten Gürtellage eingebetteten Festigkeitsträger, also der High-Elongation-Stahlcorde, bei der genannten Kompression zu verzeichnen sind. Brüche der Festigkeitsträger in der als Nullgradlage ausgebildeten Gürtellage können die Funktionalität dieser reduzieren und damit auch die Funktionalität und Lebensdauer des Nutzfahrzeugreifens. Die in der als Nullgradlage ausgebildeten Gürtellage eingebetteten Festigkeitsträger nehmen die Belastungen durch Fahrzeuggewicht und Beschleunigungskräfte auf, wobei Brüche zwangsläufig die Tragfähigkeit des Nutzfahrzeugreifens verringern. Zudem kommt es durch derartige Beschädigungen zu Spannungsspitzen, die den Nutzfahrzeugreifen schneller altern lassen, wodurch sich Risse im Nutzfahrzeugreifen bilden können. Weiterhin verursachen derartige Beschädigungen eine unerwünschte Lastverteilung, wodurch mehr Energie in Wärme umgewandelt wird, wobei eine solche Wärmeentwicklung zu einer schnelleren Materialermüdung und Alterung des Nutzfahrzeugreifens führt. Somit führt die erhöhte Steifigkeit der schwefelvernetzbaren Gummimischung der als Nullgradlage ausgebildeten Gürtellage vorteilhaft zu weniger Brüchen der Festigkeitsträger und damit zu einer längeren Haltbarkeit und zu einer Verbesserung des Rollwiderstandes des Nutzfahrzeugreifens.

Die in dieser Schrift verwendete Angabe phr (parts per hundred parts of rubber by weight) ist die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Im erfindungsgemäßen Nutzfahrzeugreifen sind in der als Nullgradlage ausgebildeten Gürtellage High-Elongation-Stahlcorde (HE-Stahlcorde) als in der schwefelvernetzbaren Gummimischung eingebettete Festigkeitsträger vorgesehen, um in Verbindung mit der die Steifigkeit erhöhenden schwefelvernetzbaren Gummimischung besonders hohen mechanischen Beanspruchungen, wie sie insbesondere bei Elektro-Nutzfahrzeugen auftreten, standzuhalten. Solche High-Elongation-Stahlcorde haben für sich schon den Vorteil, dass sie sich stärker dehnen können, bevor sie brechen. Durch die Kombination mit der die Steifigkeit erhöhenden schwefelvernetzbaren Gummimischung wird die Belastbarkeit nochmal erheblich erhöht.

High-Elongation-Stahlcorde (HE-Stahlcorde) bestehen aus Filamenten (Wires), also einzelnen dünnen Drähten. Eine Gruppe solcher Filamente, die miteinander verdrillt sind, bildet dann eine Litze (Strand). Mehrere Litzen, die wiederum miteinander verdrillt werden, formen dann den endgültige Stahlcord (Seil).

Unter hochdispergierbarer Kieselsäure wird in dieser Schrift eine Kieselsäure verstanden, die zerfallen bzw. deagglomerieren kann und daher besonders gut und gleichmäßig in einer Elastomermatrix dispergiert (verteilt) werden kann. Diese besonders gute Verteilung kann durch elektronen- oder lichtmikroskopische Aufnahmen an Dünnschnitten nachgewiesen werden. Die von der Firma Evonik Industries vertriebenen Kieselsäuren Ultrasil^{®} VN2 und Ultrasil^{®} VN3 fallen nicht unter hochdispergierbare Kieselsäuren. Die Verwendung von hochdispergierbarer Kieselsäure soll die Materialermüdung der vulkanisierten Mischung auf ein Minimum reduzieren und damit das Risiko, dass sich die Mischung von Festigkeitsträgern löst, reduzieren. Auf dem Markt sind so genannte HD-Kieselsäuren, z. B. als Ultrasil^{®} 7000 von der Firma Evonik Industries oder Zeosil^{®} 1165 MP von der Firma Rhodia erhältlich, die erfindungsgemäß in der schwefelvernetzbaren Gummimischung einsetzbar sind.

Durch die Verwendung von 10 bis 100 phr zumindest einer hochdispergierbaren Kieselsäure mit der beanspruchten hohen CTAB-Zahl in der schwefelvernetzbaren Gummimischung der als Nullgradlage ausgebildeten Gürtellage wird die Haltbarkeit des Nutzfahrzeugreifen erhöht und gleichzeitig ein geringer Rollwiderstand des Nutzfahrzeugreifens erreicht. Es können auch mehrere dieser Kieselsäuren nebeneinander, sogenannte Blends, in der schwefelvernetzbaren Gummimischung der als Nullgradlage ausgebildeten Gürtellage vorliegen.

Die schwefelvernetzbare Gummimischung der als Nullgradlage ausgebildeten Gürtellage enthält 70 bis 100 phr Naturkautschuk (NR), wobei es sich vorteilhaft um auf biochemischem Wege in Pflanzen synthetisiertes Polyisopren mit einem cis-1,4-Gehalt von mehr als 99 % handeln kann.

Als weiteren Kautschuk enthält die schwefelvernetzbare Gummimischung der als Nullgradlage ausgebildeten Gürtellage bis zu 30 phr eines Polybutadiens (BR). Für besonders gute Haftungseigenschaften und eine gutes Verarbeitungsverhalten ist das Polybutadien eines mit einem cis-Gehalt von mehr als 95 Gew.-% oder ein funktionalisiertes Li-Polybutadien, z. B. BR1250 H von der Firma Nippon Zeon oder solche funktionalisierten Polybutadiene, wie sie in der EP 2 289 990 A1 beschrieben sind.

Die schwefelvernetzbare Gummimischung der als Nullgradlage ausgebildeten Gürtellage enthält 1 bis 50 phr zumindest eines Rußes. Als Ruß-Typen kommen solche in Frage, die für Gummimischungen üblich sind, beispielsweise Ruß des Typs N 326.

Zur Verbesserung der Verarbeitbarkeit und zur Anbindung der Kieselsäure und anderer gegebenenfalls vorhandener polarer Füllstoffe an den Dienkautschuk werden Silan-Kupplungsagenzien in der Gummimischung eingesetzt. Die Silan-Kupplungsagenzien reagieren mit den oberflächlichen Silanolgruppen der Kieselsäure während des Mischens der Gummimischung bzw. Kautschukmischung (in situ) oder bereits vor der Zugabe des Füllstoffes zur Gummimischung bzw. Kautschukmischung oder zum Gummi bzw. Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, - NH₂ oder -S_{X}- (mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid(TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50-S der Firma Evonik Industries) zugesetzt werden. Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive Performance Materials, USA, oder solche, die unter dem Namen VP Si 363 von der Firma Evonik Industries vertrieben werden.

Die schwefelvernetzbare Gummimischung der als Nullgradlage ausgebildeten Gürtellage kann neben Ruß und den hoch dispergierbaren Kieselsäuren auch noch weitere Füllstoffe enthalten, wie andere Kieselsäuren, Alumosilicate, Kreide, Stärke, Magnesiumoxid, Titandioxid oder Kautschukgele.

Die schwefelvernetzbare Gummimischung der als Nullgradlage ausgebildeten Gürtellage des erfindungsgemäßen Nutzfahrzeugreifens enthält außerdem ein Haftsystem, vorzugsweise ein Haftsystem für die Gummi-Metall-Haftung.

Für gewisse Anwendungsfälle kann es von Vorteil sein, wenn nur die Gürtellage, die als Nullgradlage ausgebildet ist, die erfindungsgemäß eingesetzte schwefelvernetzbare Gummimischung aufweist.

Es kann von Vorteil sein, wenn das Haftsystem ein Stahlcordhaftystem auf der Basis von organischen Cobaltsalzen, vorzugsweise in Mengen von 0,2 bis 2,0 phr, besonders bevorzugt in Mengen von 0,2 bis 1,0 phr, und von Verstärkerharzen und mehr als 2,5 phr Schwefel ist. Dadurch wird eine verbesserte Gummi-Metall-Haftung erreicht.

Als Cobaltsalze können z. B. Cobaltstearat, -borat, -borat-alkanoate, -naphthenat, -rhodinat, -octoat, -adipat usw. verwendet werden. Als Verstärkerharze können Resorcin-Formaldehyd-Harze, beispielsweise Resorcin-Hexamethoxymethylmelamin-Harze (HMMM) oder Resorcin-Hexamethylentetramin-Harze (HEXA), oder modifizierte Phenolharze, beispielsweise Alnovol^{®}-Typen, eingesetzt werden. Von den Resorcin-Harzen können auch die Vorkondensate eingesetzt werden.

Es kann von Vorteil sein, wenn die schwefelvernetzbare Gummimischung der als Nullgradlage ausgebildeten Gürtellage folgende weitere Bestandteile enthält:
- zumindest ein Novolak-Harz, vorzugsweise in einer Menge von weniger als 5 phr, besonders bevorzugt in einer Menge von weniger als 4 phr, ganz besonders bevorzugt in einer Menge von weniger als 3,5 phr, wobei das Novolak-Harz Alkylurethaneinheiten aufweist und durch Reaktion von einer Phenolverbindung, einem Aldehyd und einem Carbamat-Harz hergestellt ist, wobei das Carbamat-Harz durch Reaktion von Alkylurethan mit einem Aldehyd hergestellt ist,
- zumindest ein verethertes Melaminharz, vorzugsweise in einer Menge von weniger als 5 phr, besonders bevorzugt in einer Menge von weniger als 4 phr, ganz besonders bevorzugt in einer Menge von 1,2 bis 3,5 phr, welches ein sekundäres Netzwerk zur Verbesserung von Steifigkeit und Haftung aufbaut. In den angegebenen Mengen wird ein besonders vorteilhaftes Verhältnis aus Rissbeständigkeit und Haftung erzielt.

Hierdurch werden Vorteile in der Zugfestigkeit und der Bruchdehnung erreicht.

Es kann von Vorteil sein, wenn die schwefelvernetzbare Gummimischung der als Nullgradlage ausgebildeten Gürtellage frei von Resorcin ist, wodurch sie umweltfreundlicher und weniger gesundheitsgefährdend bei der Verarbeitung ist.

Es kann von Vorteil sein, wenn das veretherte Melaminharz Hexamethoxymethylmelamin (HMMM) ist.

Das Novolak-Harz ist durch Reaktion von einer Phenolverbindung mit einem Aldehyd und einem Carbamat-Harz hergestellt. Die Phenolverbindung kann dabei ausgewählt sein aus der Gruppe bestehend aus Phenol, o-, m- und p-Kresol und o-, m- und p-Monoalkylphenolen mit Alkylresten mit bis zu 18 Kohlenstoffatomen. Das Aldehyd kann ausgewählt sein aus der Gruppe bestehend aus Formaldehyd, Acetaldehyd, Propionaldehyd, Butyraldehyd und Isobutyraldehyd. Das Carbamat-Harz ist durch Reaktion von Alkylurethan mit einem Aldehyd hergestellt. Das Alkylurethan kann dabei ausgewählt sein aus der Gruppe bestehend aus Ethylurethan, Butylurethan, 2-Ethylhexylurethan und Decylurethan. Das Aldehyd für das Carbamat-Harz kann ausgewählt sein aus der Gruppe bestehend aus Formaldehyd, Acetaldehyd, Propionaldehyd, Butyraldehyd und Isobutyraldehyd. Bei den Aldehyden für das Novolak-Harz und das Carbamat-Harz kann es sich um gleiche oder unterschiedliche Aldehyde handeln.

Es kann von Vorteil sein, wenn das Aldehyd vorzugsweise Formaldehyd ist.

Es kann von Vorteil sein, wenn das Alkylurethan vorzugsweise Butylurethan ist.

Es kann von Vorteil sein, wenn die Phenolverbindung vorzugsweise Phenol ist.

Derartige Novolak-Harze zeichnen sich durch besonders vorteilhafte Stahlcordhaftung aus. Beispielsweise kann Alnovol **PN** 760 von der Firma Allnex eingesetzt werden. Eine entsprechend formulierte schwefelvernetzbare Gummimischung für Stahlcordhaftmischungen ist aus der WO 2021197653 A1 bekannt.

Es kann von Vorteil sein, wenn das Verhältnis aus hoch dispergierbarer Kieselsäure zu Ruß 1:4,5 bis 20:1 beträgt. Durch dieses Verhältnis wird eine besonders ausgewogene Verstärkung erzielt, bei der die positiven Eigenschaften beider Füllstoffe sich gegenseitig ergänzen und Steifigkeit, Haftung und Hysterese im optimalen Verhältnis zueinander stehen.

Es kann von Vorteil sein, wenn die schwefelvernetzbare Gummimischung der als Nullgradlage ausgebildeten Gürtellage 1 bis 45 phr des zumindest einen Rußes enthält. Durch den Einsatz von höheren Rußmengen erhöht sich die Hysterese unvorteilhaft.

Es kann von Vorteil sein, wenn die schwefelvernetzbare Gummimischung der als Nullgradlage ausgebildeten Gürtellage 15 bis 100 phr der zumindest einen hoch dispergierbaren Kieselsäure enthält. Bei geringeren Mengen verringert sich die Steifigkeit unvorteilhaft.

Es kann von Vorteil sein, wenn die zumindest eine hoch dispergierbare Kieselsäure zu mindestens 33%, bevorzugt zu mindestens 50%, besonders bevorzugt zu mindestens 75%, jeweils bezogen auf das Gesamtgewicht der in der schwefelvernetzbaren Gummimischung enthaltenen Kieselsäure, aus Reisschalen-Asche hergestellt ist ("rice husk ash silica" (RHAS)). Dadurch wird die Nachhaltigkeit der schwefelvernetzbaren Gummimischung und somit des Gummiprodukts bzw. Reifens weiter erhöht.

Es kann zum Erzielen einer hohen Steifigkeit von Vorteil sein, wenn das zumindest eine Polybutadien ausgewählt ist aus einem Polybutadien mit einem cis-Gehalt von mehr als 95 Gew.-% oder einem funktionalisierten Li-Polybutadien.

Es kann zum Erzielen einer hohen Steifigkeit von Vorteil sein, wenn die schwefelvernetzbare Gummimischung der als Nullgradlage ausgebildeten Gürtellage weniger als 15 phr Prozesshilfsmittel enthält. Unter Prozesshilfsmittel werden vorzugsweise Öle und andere viskositätssenkende Substanzen verstanden. Es kann sich bei diesen Prozesshilfsmitteln beispielsweise um Weichmacheröle oder Weichmacherharze handeln.

Als weitere Zusatzstoffe kann die schwefelvernetzbaren Gummimischung bzw. Kautschukmischung der als Nullgradlage ausgebildeten Gürtellage weitere übliche Zuschlagstoffe in üblichen Gewichtsteilen, wie Vulkanisationsbeschleuniger, Vulkanisationsverzögerer, Zinkoxid und Alterungsschutzmittel, enthalten.

Um die Nachhaltigkeit des Gummiprodukts bzw. Reifens weiter zu erhöhen, kann es von Vorteil sein, wenn die schwefelvernetzbare Gummimischung der als Nullgradlage ausgebildeten Gürtellage mindestens 10 phr recycelte Materialien enthält.

Recycelte Materialien umfassen vorteilhaft alle in der Industrie gängigen oder neuartigen recycelten Stoffe, wie etwa zurückgewonnene Ruße (r-CB), Regenerate aus Altreifen und anderen gebrauchten Gummiartikeln (z.B. Förderbänder, Keilriemen, Schläuche) oder Kunststoffartikeln, sowie Produkte aus Pyrolyseprozessen, darunter Pyrolyseöl (TPO) und daraus gewonnene Materialien wie Leicht- und Schweröle, Ruße (s-CB), Harze (s-Resins) und Prozesshilfsmittel (s-Plasticizer).

Es kann von Vorteil sein, wenn die schwefelvernetzbare Gummimischung der als Nullgradlage ausgebildeten Gürtellage einen Spannungswert bei 300% Dehnung eines R1 Prüfkörpers in der Dicke 6,3 mm +-0,3 mm gemäß **DIN** 53504 von mindestens 12 MPa, bevorzugt mindestens 13 MPa, insbesondere bevorzugt mindestens 14 MPa aufweist. Eine derartige Steifigkeit wirkt sich besonders vorteilhaft auf die Verhinderung von Stahlcordbrüchen und somit auf die Haltbarkeit der Nullgradlage aus.

Es kann von Vorteil sein, wenn die schwefelvernetzbare Gummimischung der als Nullgradlage ausgebildeten Gürtellage einen Verlustfaktor tan δₘₐₓ, aus dynamisch-mechanischer Messung gemäß DIN 53 513 bei 55 °C als Maximalwert über den Dehnungssweep von maximal 0,17, vorzugsweise von maximal 0,16, besonders bevorzugt von maximal 0,155, aufweist. Durch die niedrige Hysterese wird ein besonders niedriger Rollwiderstand des Reifens erzielt, was sich positiv auf die Reichweite bzw. den Energieverbrauch des Nutzfahrzeugs auswirkt. Weiterhin sorgt die verringerte Wärmeentwicklung für eine bessere Haltbarkeit des Reifens.

Ein Beispiel für eine schwefelvernetzbare Gummimischung für Stahlkordhaftmischungen und mit derartigem Spannungswert und derartigem Verlustfaktor ist u.a. aus der WO 2013 / 034368 bekannt.

Es kann von Vorteil sein, wenn der Nutzfahrzeugreifen beidseitig ein Gürtelkantenpolster aufweist, das aus einer schwefelvernetzbaren Gummimischung nach zumindest einem der Ansprüche bzw. wie zuvor beschrieben besteht.

Es kann von Vorteil sein, wenn wenigstens zwei Gürtellagen als Kreuzlagen ausgebildet sind, wobei wenigstens eine, vorzugsweise alle der als Kreuzlagen ausgebildeten Gürtellagen Festigkeitsträger enthalten, die in einer schwefelvernetzbaren Gummimischung nach zumindest einem der Ansprüche bzw. wie zuvor beschrieben eingebettet sind.

Es kann von Vorteil sein, wenn der Gürtel zumindest vier, vorzugsweise fünf Gürtellagen aufweist.

Vorzugsweise ist die als Nullgradlage ausgebildete Gürtellage immer direkt zwischen zwei als Kreuzlagen ausgebildeten Gürtellagen angeordnet, wobei die Kreuzlagen auch als Arbeitslagen bezeichnet werden können.

Es kann von Vorteil sein, wenn die Festigkeitsträger der radialinnersten Gürtellage einen Winkel von 40° bis 70° zur Umfangsrichtung aufweisen.

Es kann von Vorteil sein, wenn die Festigkeitsträger der als Nullgradlage ausgebildeten Gürtellage aus einem High-Elongation-Stahlcord mit dem Aufbau bzw. der Konstruktion N (= Anzahl der Litzen) x M (= Anzahl der Filamente pro Litzen) x d (= Durchmesser der Filamente in mm) mit N = 3 - 4, M = 3 - 7 und d = 0,2 - 0,4 mm, vorzugsweise 3 x 7 x 0,22 mm, bestehen. Für einige Ausführungen kann es von Vorteil sein, wenn geringfügig verschiedene Drahtstärken innerhalb eines High-Elongation-Stahlcordes kombiniert sind, um die Gummidurchdringung des High-ElongationStahlcordes einstellen zu können, also mit N x (a*d1+b*d2), wobei a+b= M ist, beispielsweise 3 x (1 x 0,25 mm + 6 x 0,22 mm).

Es kann von Vorteil sein, wenn der ungummierte High-Elongation-Stahlcord bei einer Dehnung von 2%, zumindest aber von 1%, eine Cordlast von < 100 N aufweisen, gemessen in Anlehnung an ASTM D 2969 und Bista E6 mit pneumatisch spannende Klemmen vom Klemmentyp Zwick 012415 (8397.04.00). Es kann von Vorteil sein, wenn die Bruchdehnung des ungummierten High-Elongation-Stahlcordes zumindest mehr als 3,5%, vorzugsweise mehr als 4% beträgt.

Es kann von Vorteil sein, wenn die gesamte Breite der als Nullgradlage ausgebildeten Gürtellage, unter Nenndruck und auf Normfelge, 20 mm bis 100 mm, bevorzugt 20 mm bis 60 mm, besonders bevorzugt 20 mm bis 40 mm, schmaler ist als die schmalste gesamte Breite einer der als Kreuzlagen ausgebildeten Gürtellagen, wobei die gesamte Breite der Gürtellage der Krümmung der Gürtellage folgend gemessen wird. Der Abstand wird gebildet aus der Differenz der Breiten der Gürtellagen.

Wie bereits oben beschrieben führt die schwefelvernetzbare Gummimischung in der als Nullgradlage ausgebildeten Gürtellage zu einer erhöhten Steifigkeit, wodurch im Zusammenspiel mit dem als Festigkeitsträger eingesetzten High-Elongation-Stahlcord weniger Stahlcordbrüche während der Fahrt, insbesondere bei Elektro-Nutzfahrzeugen, zu verzeichnen sind. Das führt dazu, dass die als Nullgradlage ausgebildete Gürtellage breiter ausgebildet werden kann, ohne dass es zu den sonst üblichen Stahlcordbrüchen bei solchen Breiten kommt. Eine breitere als Nullgradlage ausgebildete Gürtellage kann durch die größere Fläche noch gleichmäßiger Belastungen aufnehmen, damit diese an die Felge weitergeleitet werden. Dadurch werden Schäden, die sonst durch Spannungsspitzen entstehen, vermieden, wodurch die Haltbarkeit und Tragfähigkeit des Nutzfahrzeugreifen erhöht und der Rollwiderstand verringert wird.

Es kann von Vorteil sein, wenn die High-Elongation-Stahlcorde aus mehreren Litzen bestehen, wobei jede Litze aus Filamenten besteht, die spiralförmig um ein zentrales Filament gewickelt sind, wobei zwischen dem zentralen Filament und den dieses zentrale Filament umgebenden Filamenten zumindest teilweise Hohlräume vorhanden sind, die nicht mit einer schwefelvernetzbaren Gummimischung gefüllt sind. Dadurch sind die in der schwefelvernetzbaren Gummimischung der als Nullgradlage ausgebildeten Gürtellage eingebetteten High-Elongation-Stahlcorde flexibler und mithin bei der weiter oben bereits beschriebenen Kompression noch dehnbarer, wodurch die Gefahr von Brüchen mit den weiter oben bereits beschriebenen Nachteilen weiter verringert wird. Weiterhin verringern sich Hysterese und Rollwiderstand, was sich ebenfalls positiv auf die Haltbarkeit bzw. die Fahrzeugreichweite auswirkt.

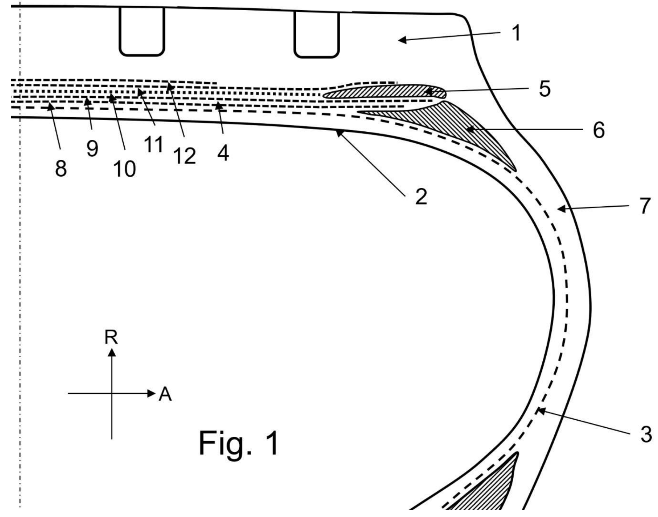

Nachfolgend wird die Erfindung anhand eines Ausführungsbeispiels erläutert, das in der Zeichnung dargestellt ist. In dieser zeigt
- Fig. 1: einen schematischen Teilquerschnitt eines Nutzfahrzeugreifens radialer Bauart insbesondere im Gürtel- und Laufstreifenbereich.

Fig. 1 zeigt einen Querschnitt durch den Laufstreifen- und Gürtelbereich eines Fahrzeugluftreifens für Nutzfahrzeuge, insbesondere für Elektro-Lastkraftwagen, Elektro-Busse oder Lastkraftwagenanhänger. Von den im gezeigten Bereich des Fahrzeugluftreifens üblicherweise vorhandenen Bauteilen sind ein profilierter Laufstreifen 1, eine Innenschicht 2, eine Karkasseinlage 3 und ein mehrlagiger Gürtel 4 dargestellt. Weiterhin dargestellt sind die Gürtelkantenpolster 5,die unterhalb des Randabschnitte des Gürtels 4 vorgesehenen Schulterpolster 6 sowie die Seitenwand 7.

Der Gürtel 4 weist fünf Gürtellagen 8, 9, 10, 11 und 12 auf, wobei die erste Gürtellage die radial innerste Gürtellage 8 ist. Die zweite und die vierte Gürtellage 9 und 11 sind sogenannte als Kreuzlagen bzw. Arbeitslagen ausgebildete Gürtellagen, wobei die zweite Gürtellage 9 breiter ist als die vierte Gürtellage 11. An die vierte Gürtellage 11 schließt die radial äußerste Gürtellage 12 an.

Die mittlere Gürtellage ist eine als Nullgradlage ausgebildete Gürtellage 10, wobei die als High-Elongation Corde ausgebildeten Festigkeitsträger dieser Gürtellage 10 in der erfindungsgemäß vorgesehenen schwefelvernetzbaren Gummimischung, die auch als Gummierungsmischung bezeichnet werden kann, eingebettet sind.

Als Gummierungsmischung wurde die folgende eingesetzt:

| | |
|---|---|
| Naturkautschuk | 80 phr |
| Polybutadien (BR) | 20 phr |
| Kieselsäure (Ultrasil^{®} VN3, CTAB-Zahl = 165 m²/g, Evonik Industries, Deutschland): | 55 phr |
| Silankupplungsagens (auf Ruß im Gewichtsverhältnis 1:1, X 50-S^{®}, Evonik Industries, Deutschland): | 8,5 phr |
| Prozesshilfsmittel | 5 phr |
| Alterungsschutzmittel | 4 phr |
| Organisches Cobaltsalz | 0,4 phr |
| Harz aus Resorcin und Formaldehydspender | 5 phr |
| Zinkoxid | 8 phr |
| Schwefel | 4 phr |

Bei dieser Gummierungsmischung wird, nach 15-minütiger Vulkanisation bei 160 °C und unter Druck, für einen R1 Prüfkörper in der Dicke 6,3 mm +-0,3 mm gemäß **DIN** 53504 ein Spannungswert bei 300% Dehnung von 14,2 MPa erhalten, sowie ein Verlustfaktor tan δₘₐₓ von 0,135 aus dynamisch-mechanischer Messung gemäß **DIN** 53 513 bei 55 °C als Maximalwert über den Dehnungssweep erreicht.

Bei einem derartigen Aufbau des Gürtels mit derartiger Gummierungsmischung wird die Aufgabe, einen Nutzfahrzeugreifen der eingangs genannten Art bereitzustellen, der eine verbesserte Haltbarkeit und gleichzeitig einen geringen Rollwiderstand, insbesondere hinsichtlich seiner Verwendung bei Elektro-Nutzfahrzeugen aufweist, besonders vorteilhaft gelöst.

### Bezugszeichenliste

- 1: Laufstreifen
- 2: Innenschicht
- 3: Karkasseinlage
- 4: Gürtel
- 5: Gürtelkantenpolster
- 6: Schulterpolster
- 7: Seitenwand
- 8, 9, 10, 11,12: Gürtellage

## Patentansprüche

1. Nutzfahrzeugreifen in Radialbauart mit einer Karkasse (3), mit einem radial außerhalb der Karkasse (3) aufgebauten Gürtel (4), mit einem radial außerhalb des Gürtels (4) auf dem Gürtel (4) aufgebauten profilierten Laufstreifen (1), wobei der Gürtel (4) aus wenigstens drei von radial innen nach radial außen aufeinander liegend angeordneten Gürtellagen (8, 9, 10, 11, 12) ausgebildet ist, wobei die Gürtellagen (8, 9, 10, 11, 12) in einer schwefelvernetzbaren Gummimischung eingebettete Festigkeitsträger enthalten, die in jeder Gürtellage (8, 9, 10, 11, 12) jeweils parallel zueinander verlaufen, und wobei eine der zwischen einer radial inneren und einer radial äußeren Gürtellagen (8, 9, 11, 12), vorzugsweise zwischen einer radial inneren und einer radial äußeren als Kreuzlagen bzw. Arbeitslagen ausgebildeten Gürtellagen (9, 11), angeordnete Gürtellage (10) eine als Nullgradlage ausgebildete Gürtellage (10) ist, deren Festigkeitsträger High-Elongation-Stahlcorde sind, die in Umfangsrichtung oder zur Umfangsrichtung unter einem Winkel, welcher von der Umfangsrichtung um maximal ± 5° abweicht, verlaufen, **dadurch gekennzeichnet, dass** zumindest die schwefelvernetzbare Gummimischung der als Nullgradlage ausgebildeten Gürtellage (10) folgende Bestandteile enthält:
• 70 bis 100 phr (Gewichtsteile, bezogen auf 100 Gewichtsteile der gesamten Kautschuke in der Mischung) Naturkautschuk,
• bis zu 30 phr eines Polybutadiens,
• 1 bis 50 phr zumindest eines Rußes,
• 10 bis 100 phr zumindest einer hoch dispergierbaren Kieselsäure, die eine CTAB-Zahl gemäß ASTM D 3765 von mehr als 130 m²/g aufweist,
• zumindest ein Silankupplungsagens und
• ein Haftsystem.

2. Nutzfahrzeugreifen nach Anspruch 1, **dadurch gekennzeichnet, dass** das Haftsystem ein Stahlcordhaftystem auf der Basis von organischen Cobaltsalzen, vorzugsweise in Mengen von 0,2 bis 2,0 phr, besonders bevorzugt in Mengen von 0,2 bis 1,0 phr, und von Verstärkerharzen und mehr als 2,5 phr Schwefel ist.

3. Nutzfahrzeugreifen nach einem der vorigen Ansprüche, **dadurch gekennzeichnet, dass** die schwefelvernetzbare Gummimischung der als Nullgradlage ausgebildeten Gürtellage (10) folgende weitere Bestandteile enthält:
• zumindest ein Novolak-Harz, vorzugsweise in einer Menge von weniger als 5 phr, besonders bevorzugt in einer Menge von weniger als 4 phr, ganz besonders bevorzugt in einer Menge von weniger als 3,5 phr, wobei das Novolak-Harz Alkylurethaneinheiten aufweist und durch Reaktion von einer Phenolverbindung, einem Aldehyd und einem Carbamat-Harz hergestellt ist, wobei das Carbamat-Harz durch Reaktion von Alkylurethan mit einem Aldehyd hergestellt ist,
• zumindest ein verethertes Melaminharz, vorzugsweise in einer Menge von weniger als 5 phr, besonders bevorzugt in einer Menge von weniger als 4 phr, ganz besonders bevorzugt in einer Menge von 1,2 bis 3,5 phr.

4. Nutzfahrzeugreifen nach einem der vorigen Ansprüche, **dadurch gekennzeichnet, dass** die schwefelvernetzbare Gummimischung der als Nullgradlage ausgebildeten Gürtellage (10) frei von Resorcin ist.

5. Nutzfahrzeugreifen nach Anspruch 3, **dadurch gekennzeichnet, dass** das veretherte Melaminharz Hexamethoxymethylmelamin (HMMM) ist, das Aldehyd Formaldehyd ist, das Alkylurethan Butylurethan ist und/oder die Phenolverbindung Phenol ist.

6. Nutzfahrzeugreifen nach einem der vorigen Ansprüche, **dadurch gekennzeichnet, dass** das Verhältnis aus hochdispergierbarer Kieselsäure zu Ruß 1:4,5 bis 20:1 beträgt.

7. Nutzfahrzeugreifen nach einem der vorigen Ansprüche, **dadurch gekennzeichnet, dass** die schwefelvernetzbare Gummimischung der als Nullgradlage ausgebildeten Gürtellage (10) weniger als 15 phr Prozesshilfsmittel enthält.

8. Nutzfahrzeugreifen nach einem der vorigen Ansprüche, **dadurch gekennzeichnet, dass** die schwefelvernetzbare Gummimischung der als Nullgradlage ausgebildeten Gürtellage (10) nach Vulkanisation unter Druck bei 160 °C für 15 min einen Spannungswert bei 300% Dehnung eines R1 Prüfkörpers in der Dicke 6,3 mm +-0,3 mm gemäß DIN 53504 von mindestens 12 MPa, bevorzugt mindestens 13 MPa, insbesondere bevorzugt mindestens 14 MPa aufweist.

9. Nutzfahrzeugreifen nach einem der vorigen Ansprüche, **dadurch gekennzeichnet, dass** die schwefelvernetzbare Gummimischung der als Nullgradlage ausgebildeten Gürtellage (10) einen Verlustfaktor tan δₘₐₓ, aus dynamisch-mechanischer Messung gemäß DIN 53 513 bei 55 °C als Maximalwert über den Dehnungssweep von maximal 0,17, vorzugsweise von maximal 0,16, besonders bevorzugt von maximal 0,155, aufweist.

10. Nutzfahrzeugreifen nach einem der vorigen Ansprüche, **dadurch gekennzeichnet, dass** dieser beidseitig ein Gürtelkantenpolster (5) aufweist, die aus einer schwefelvernetzbaren Gummimischung nach zumindest einem der vorherigen Ansprüche besteht.

11. Nutzfahrzeugreifen nach einem der vorigen Ansprüche, **dadurch gekennzeichnet, dass** wenigstens zwei Gürtellagen (9, 11) als Kreuzlagen bzw. Arbeitslagen ausgebildet sind, wobei wenigstens eine, vorzugsweise alle der als Kreuzlagen bzw. Arbeitslagen ausgebildeten Gürtellagen (9, 11) Festigkeitsträger enthalten, die in einer schwefelvernetzbaren Gummimischung nach einem der vorigen Ansprüche eingebettet sind.

12. Nutzfahrzeugreifen nach einem der vorigen Ansprüche, **dadurch gekennzeichnet, dass** die Festigkeitsträger der als Nullgradlage ausgebildeten Gürtellage (10) aus einem High-Elongation-Cord mit dem Aufbau N x M x d (N = Anzahl der Litzen, M = Anzahl der Filamente, d = nomineller Durchmesser jedes Filaments in mm) mit N = 3 - 4, M = 3 - 7 und d = 0,2 - 0,4 mm, vorzugsweise 3 x 7 x 0.22 mm, besteht.

13. Nutzfahrzeugreifen nach einem der vorigen Ansprüche, **dadurch gekennzeichnet, dass** der ungummierte High-Elongation-Stahlcord bei einer Dehnung von 2%, zumindest aber von 1 %, eine Cordlast < 100 N aufweisen und/oder dass die Bruchdehnung des ungummierten High-Elongation-Stahlcordes zumindest > 3,5%, vorzugsweise > 4%, ist.

14. Nutzfahrzeugreifen nach einem der vorigen Ansprüche, **dadurch gekennzeichnet, dass** die gesamte Breite der als Nullgradlage ausgebildeten Gürtellage (10), unter Nenndruck und auf Normfelge, 20 mm bis 100 mm, bevorzugt 20 mm bis 60 mm, besonders bevorzugt 20 mm bis 40 mm, schmaler ist als die schmalste gesamte Breite einer der als Kreuzlagen (9, 11) ausgebildeten Gürtellagen.

15. Nutzfahrzeugreifen nach einem der vorigen Ansprüche, **dadurch gekennzeichnet, dass** High-Elongation-Stahlcorde aus mehreren Litzen bestehen, wobei jede Litze aus mehreren Filamenten besteht, die spiralförmig um ein zentrales Filament gewickelt sind, wobei zwischen dem zentralen Filament und den dieses umgebenden Filamenten zumindest teilweise Hohlräume vorhanden sind, die mit keiner schwefelvernetzbaren Gummimischung gefüllt sind.
